# EUROPÄISCHE PATENTSCHRIFT

(11) **EP 1 489 989 B1**
(45) Veröffentlichungstag und Bekanntmachung des Hinweises auf die Patenterteilung: **12.12.2007**
(21) Anmeldenummer: 03724949.7
(22) Anmeldetag: 03.04.2003
(51) Int. Cl.: A61C 17/34

(54) **ELEKTRISCHE ZAHNBÜRSTE**
ELECTRICAL TOOTHBRUSH
BROSSE A DENTS ELECTRIQUE

(30) Priorität: 04.04.2002 DE 10214803
(43) Veröffentlichungstag der Anmeldung: 29.12.2004
(73) Patentinhaber: GIMELLI PRODUKTIONS AG, CH-3052 Zollikofen (CH)
(72) Erfinder: RAGAZZO, Andrea, CH-3011 Bern (CH); SCHÜTZ, Alfred, CH-3052 Zollikofen (CH)
(74) Vertreter: Hebing, Norbert
(86) Internationale Anmeldenummer: PCT/EP2003/003462
(87) Internationale Veröffentlichungsnummer: WO 2003/084427

(56) Entgegenhaltungen:
- WO-A-01/06946
- WO-A-96/10373

## Beschreibung

Die Erfindung betrifft eine elektrische Zahnbürste mit einem Handteil und einem einen Bürstenkopf aufweisenden Bürstenteil, welches eine von einem Getriebe in eine in Längsrichtung hin- und hergehende Schiebebewegung versetzbare Schubstange aufweist und bei der im Bürstenkopf in einer Borstenträgerplatte Borstenträger drehbar gelagert sind, welche mittels der Schubstange in eine pendelnde Drehbewegung versetzbar sind und bei der der Bürstenkopf durch das Getriebe in eine um die Längsachse der Zahnbürste pendelnde Bewegung versetzbar ist.

Eine elektrische Zahnbürste der vorstehenden Art ist Gegenstand der US 4,989,287. Bei der in dieser Schrift erläuterten Zahnbürste ist die Schubstange unverdrehbar im Bürstenteil gelagert. Das Bürstenteil ist relativ um seine Längsachse verdrehbar mit dem Handteil verbunden. Das Getriebe im Handteil erzeugt sowohl die Schwenkbewegung als auch die Schiebebewegung. Durch die Schwenkbewegung der Schubstange um ihre Längsachse schwenkt zugleich das gesamte Bürstenteil um seine Längsachse, so dass man bei Benutzung der Zahnbürste nur das Handteil und nicht das vergleichbar große Bürstenteil halten darf.

Das Getriebe ist bei der bekannten Zahnbürste so gestaltet, dass man bei der Auslegung der beiden erzeugten Bewegungen eng festgelegt ist, weil ein einziger Exzenter beide Bewegungen erzeugt und deshalb eine Veränderung seiner Exzentrizität, beispielsweise zum Zwecke der Vergrößerung der Schiebebewegung, zugleich zu einer Vergrößerung der Schwenkbewegung führt.

Die US 4,710,995 zeigt auch schon eine elektrische Zahnbürste, bei der ein Getriebe für die Schiebebewegung und ein Getriebe für die Schwenkbewegung vorgesehen ist, wobei jedes Getriebe einen eigenen Exzenter hat. Dadurch kann man beide Bewegungen unabhängig voneinander bemessen. Die Zahnbürste nach dieser Schrift ist jedoch insgesamt sehr kompliziert aufgebaut, weil sie eine Vielzahl von Zahnrädern und Ritzeln aufweist, was beispielsweise ein Blick auf die Figur 1 dieser Schrift zeigt.

Die EP 0 818 977 zeigt auch schon eine elektrische Zahnbürste, bei der das Bürstenteil unbeweglich ist und der im Zahnbürstenkopf untergebrachte Borstenträger eine Pendelbewegung ausführt. Dieser Borstenträger hat jedoch feststehende Borsten und keine einzelnen Borstenbüschel, die individuell um ihre Längsachse zu pendeln vermögen.

Der Erfindung liegt das Problem zugrunde, eine elektrische Zahnbürste der eingangs genannten Art so auszubilden, dass sowohl eine Pendelbewegung der einzelnen Borstenträger als auch eine pendelnde Schwenkbewegung der Gesamtheit der Borstenträger mit einfachen Mitteln möglich ist, ohne dass sich hierbei das gesamte Bürstenteil bewegen muss.

Dieses Problem wird erfindungsgemäß dadurch gelöst, dass die Borstenträgerplatte im Bürstenkopf um eine in Längsrichtung der Zahnbürste verlaufende Achse pendelnd gelagert und das Bürstenteil unverdrehbar mit dem Handteil verbunden ist und dass das Getriebe zum Verschwenken der Borstenträgerplatte relativ zum Bürstenteil ausgebildet ist.
Durch diese Gestaltung kann man das Bürstenteil auf übliche Weise unverdrehbar mit dem Handteil verbinden und hierzu eine einfache Kupplung, beispielsweise ein Bajonett, vorsehen. Hierdurch wird zugleich die Benutzung der Zahnbürste angenehmer, weil man dabei auch das Bürstenteil anfassen kann, da dieses sich nicht bewegt. Weiterhin ist der Energieverbrauch der Zahnbürste geringer als bei der bekannten Zahnbürste, weil nur eine verhältnismäßig kleine Borstenträgerplatte verschwenkt werden muss und nicht das gesamte Bürstenteil.

Vorteilhaft ist es, wenn gemäß einer Weiterbildung der Erfindung das Getriebe zum Erzeugen einer Pendelbewegung der Schubstange um ihre Längsachse ausgebildet ist, wenn die Schubstange relativ zum Bürstenteil um ihre Längsachse drehbar gehalten ist und wenn die Schubstange mit einem vorderen Ende axial verschieblich gegen die Borstenträgerplatte anliegt. Bei einer solchen Gestaltung wird die Schubstange in eine um ihre Längsachse pendelnde Bewegung versetzt, die sie im Bürstenkopf unmittelbar auf die Borstenträgerplatte überträgt.

Die Platzverhältnisse im Bürstenkopf werden optimal genutzt, wenn das vordere Ende der Schubstange abgekröpft ist und parallel zur Längsachse der Schubstange ausgerichtet ist.

Die elektrische Zahnbürste ist besonders kostengünstig herstellbar, wenn die Achse im Bürstenkopf an beiden Seiten der Borstenträgerplatte gehalten ist und mit einem freien Ende in die abgekröpfte Schubstange ragt. Durch diese Gestaltung vermag die Achse nicht nur die Borstenträgerplatte, sondern zusätzlich den vorderen Bereich der Schubstange schwenkbar zu lagern.

Das Getriebe ist besonders einfach gestaltet, wenn es im Handteil durch einen quer zur Zahnbürstenachse und damit auch quer zur Schubstange ausgerichteten Exzenter und ein Führungsteil der Zahnbürstenachse mit einer quer zur Längsachse der Zahnbürstenachse ausgerichteten Führung gebildet ist, welches über diesen Exzenter greift.

Die Mittel zur Erzeugung der Pendelbewegung und der Schiebebewegung sind besonders einfach gestaltet, wenn gemäß einer anderen Weiterbildung der Erfindung das Getriebe ausschließlich zur Erzeugung einer Schiebebewegung der Zahnbürstenachse ausgebildet ist und zusätzlich zu dem Getriebe ein Schwenkgetriebe zum Erzeugen der Schwenkbewegung der Zahnbürstenachse vorgesehen ist.

Das Schwenkgetriebe ist kostengünstig zu fertigen, wenn es eine verdrillte Abflachung auf der Zahnbürstenachse und einen dagegen anliegenden, gehäusefesten, radialen Vorsprung aufweist.

Alternativ ist es jedoch auch möglich vorzusehen, dass das Schwenkgetriebe eine radial in die Zahnbürstenachse führende, schräge Nut aufweist, in die ein gehäusefester, radialer Vorsprung eingreift.

Das Bürstenteil, welches von Zeit zu Zeit wegen Verschleißes oder Verschmutzung erneuert werden muss und bei Benutzung der Zahnbürste durch mehrere Personen mehrfach vorhanden sein muss, ist besonders kostengünstig herstellbar, wenn das Schwenkgetriebe ebenso wie das Getriebe für die Schiebebewegung im Handteil angeordnet ist.

Eine andere, sehr einfache Ausführungsform der Erfindung besteht darin, dass das Schwenkgetriebe im Bürstenkopf angeordnet ist und eine schräg zur Schieberichtung der Schubstange verlaufende Nut aufweist, in welche ein radial zur Schwenkachse der Borstenträgerplatte ausgerichteter, fest mit der Borstenträgerplatte verbundener Arm greift.

Möglich ist es jedoch auch vorzusehen, dass die Borstenträgerplatte im Zahnbürstenkopf auf einer parallel zur Längsachse des Bürstenteils ausgerichteten Schwenkachse an zwei gegenüberliegenden Seiten schwenkbar gelagert ist und die Schubstange im Bürstenteil unverdrehbar geführt ist.

Wenn das Getriebe die Schiebebewegung und die Pendelbewegung der Zahnbürstenachse erzeugen soll, gestaltet es sich besonders einfach, wenn es einen als Exzenter ausgebildeten Kugelkopf aufweist und die Zahnbürstenachse mit einem radial zu ihrer Längsachse versetzten Ring über diesen Kugelkopf greift.

Es sei abschließend hervorgehoben, dass die Borstenbüschel in den jeweiligen Borstenträger eingepresst, eingeklebt oder durch Umspritzen mit Kunststoff gehalten sein können. Auch kann die hin- und hergehende Drehbewegung der Borstenträger mit den Borstenbüscheln statt durch Exzenterzapfen und Quernuten auch auf andere Weise, beispielsweise mittels jeweils eines Zahnrades an jedem Borstenträger und einer Zahnstangenverzahnung an der Schubstange erzeugt werden. Die Träger der Borstenbüschel können aus zur übrigen Zahnbürste verschiedenem Material gebildet sein. Insgesamt ist die erfindungsgemäße Zahnbürste so gestaltet, dass sie sich sehr einfach aus Spritzgießteilen herstellen lässt.

Die Erfindung lässt verschiedene Ausführungsformen zu. Mehrere davon sind in der Zeichnung dargestellt und werden nachfolgend beschrieben. Die Zeichnung zeigt in
- Fig.1: einen Längsschnitt durch eine erfindungsgemäße Zahnbürste,
- Fig.2: einen perspektivischen Längsschnitt durch einen Getriebebereich im Handteil der Zahnbürste,
- Fig.3: eine perspektivische Ansicht einer zweiten Ausführungsform des Getriebebereiches,
- Fig.4: eine Prinzipskizze eines Schwenkgetriebes für die Zahnbürstenachse,
- Fig.5: eine Prinzipskizze einer zweiten Ausführungsform eines Schwenkgetriebes für die Zahnbürstenachse,
- Fig.6: eine perspektivische Ansicht einer geänderten Ausführungsform eines Zahnbürstenkopfes,
- Fig.7: einen Querschnitt durch eine weitere Ausführungsform des Zahnbürstenkopfes,
- Fig.8: einen perspektivischen Längsschnitt durch den vorderen Bereich einer Ausführungsform der erfindungsgemäßen Zahnbürste.

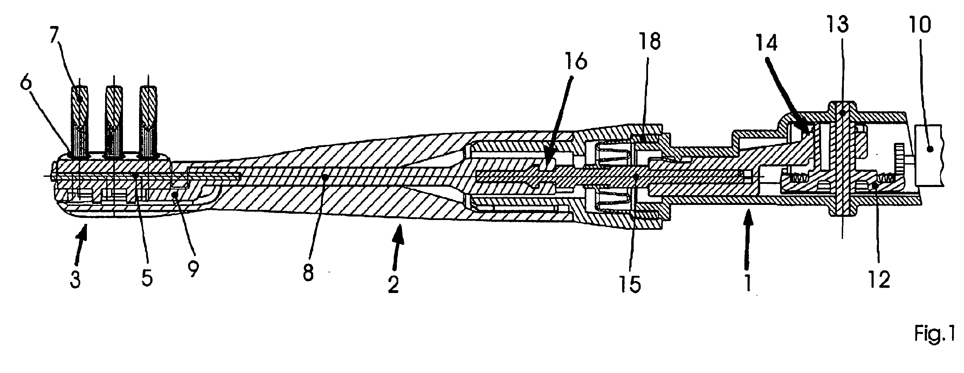

Die Figur 1 zeigt einen Längsschnitt durch den vorderen Bereich einer elektrischen Zahnbürste, welche ein Handteil 1 und ein als Aufsteckbürste ausgebildetes Bürstenteil 2 hat. Das Bürstenteil 2 bildet im vorderen Bereich einen Bürstenkopf 3, welcher eine Borstenträgerplatte 4 aufnimmt. Diese Borstenträgerplatte 4 ist auf einer im Bürstenkopf 3 gehaltenen Achse 5, die in Längsrichtung der Zahnbürste verläuft, schwenkbar gelagert.

Die Borstenträgerplatte 4 nimmt mehrere zylindrische Borstenträger 6 mit Borstenbüscheln 7 drehbar auf. Innerhalb des Bürstenteils 2 ist eine Schubstange 8 axial verschieblich und verdrehbar angeordnet. Diese Schubstange 8 hat ein abgekröpftes Ende 9, welches gegen die Borstenträgerplatte 4 anliegt und auf ein freies Ende der Achse 5 schwenkbar gelagert ist. Das abgekröpfte Ende 9 versetzt aufgrund seiner Pendelbewegung um die Längsachse der Schubstange 8 die Borstenträgerplatte 4 in eine um die Achse 5 pendelnde Bewegung und sorgt zusätzlich aufgrund der in Richtung der Längsachse gerichteten hin- und hergehenden Schiebebewegung für eine hin- und hergehende Drehung der Borstenträger 6 mit den Borstenbüscheln 7.

Im Handteil 1 befindet sich ein teilweise dargestellter Motor 10, der über ein Ritzel 11 ein Kronenrad 12 antreibt. Dieses Kronenrad 12 ist auf einer quer zur Schubstange 8 ausgerichteten Kronenradachse 13 drehbar gelagert. Das Kronenrad 13 ist Teil eines Getriebes 14, durch das eine Zahnbürstenachse 15 des Handteils 1 mittels der umlaufenden Drehbewegung des Ritzels 11 in eine kombinierte Schiebe- und Pendelbewegung versetzt wird. Die Zahnbürstenachse 15 ist über eine lösbare Kupplung 16 mit der Schubstange 8 derart verbunden, dass diese dieselbe Bewegung ausführt wie die Zahnbürstenachse 15. Zusätzlich ist in Figur 1 zu erkennen, dass das Bürstenteil 2 ein Gehäuse 17 hat, welches auf einen Gehäuseansatz 18 des Handteils 1 aufgeschoben ist, wo es mittels eines nicht gezeigten Bajonettverschlusses axial gesichert ist.

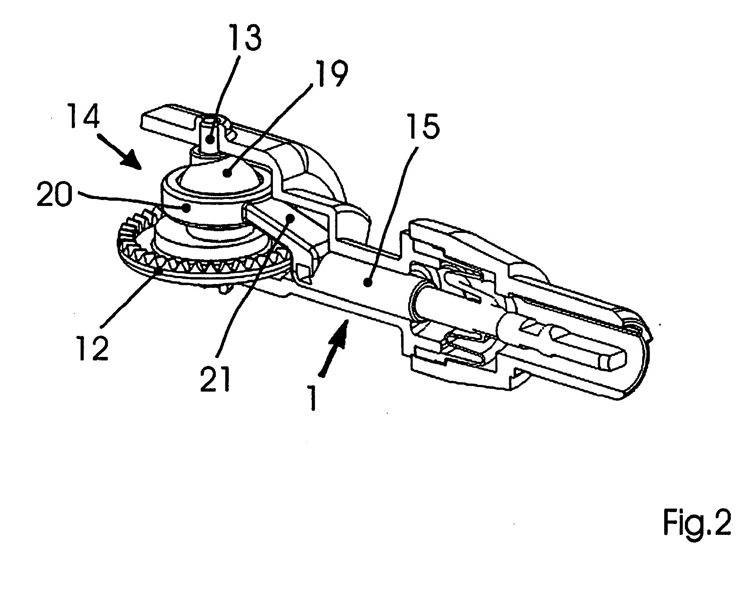

Die Figur 2 zeigt eine mögliche Ausführungsform des Getriebes 14 im Handteil 1. Zu erkennen ist wie in Figur 1 das Kronenrad 12 mit der Kronenradachse 13. Auf dieser Kronenradachse 13 ist exzentrisch ein Kugelkopf 19 angeordnet, über den die Zahnbürstenachse 15 mit einem an ihr angeformten Ring 20 greift. Dieser Ring 20 ist so ausgerichtet, dass seine Ringebene aufgrund eines schräg von der Zahnbürstenachse 15 weg zu dem Ring 20 verlaufenden Verbindungsstückes 21 sich parallel zur Längsachse der Zahnbürstenachse 15 erstreckt. Durch die umlaufende Bewegung des Kugelkopfes 19 bewegt sich die Zahnbürstenachse 15 in Längsrichtung hin und her, macht also die eingangs genannte Schiebebewegung. Gleichzeitig wird sie um ihre Längsachse hin und her verschwenkt. Das Getriebe 14 stellt bei dieser Ausführungsform somit zugleich ein Schiebegetriebe und ein Schwenkgetriebe für die Zahnbürstenachse 15 dar.

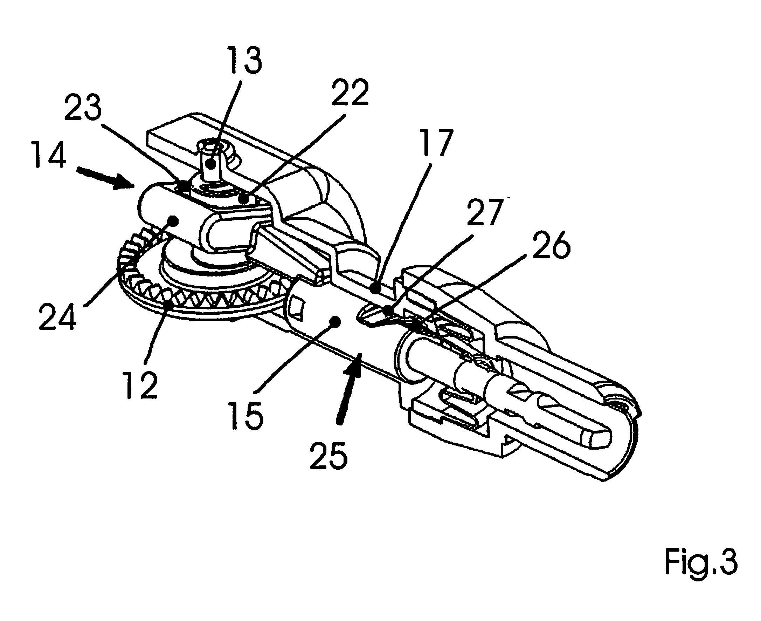

Die Figur 3 zeigt eine gegenüber Figur 2 geänderte Ausführungsform des Getriebes 14. Hierbei sind die Kronenradachse 13 und das Kronenrad 12 statt mit einem Kugelkopf 19 mit einem Exzenter 22 drehfest verbunden, der in eine quer verlaufende Führung 23 eines Führungsteils 24 der Zahnbürstenachse 15 greift. Die Führung 23 hat eine dem Durchmesser des Exzenters 22 entsprechende Breite, ist jedoch in Querrichtung so lang, dass der Exzenter 22 in Querrichtung nicht gegen seitliche Begrenzungen der Führung 23 gelangt. Dadurch bewirkt die Umlaufbewegung des Exzenters 22 lediglich eine Schiebebewegung der Zahnbürstenachse 15. Das Getriebe 14 ist bei dieser Ausführungsform also nur ein Schiebegetriebe und kein kombiniertes Schiebe- und Schwenkgetriebe. Zum Erzeugen der Schwenkbewegung der Zahnbürstenachse dient bei dieser Ausführungsform ein separates Schwenkgetriebe 25, welches durch eine verdrillte Abflachung 26 und einen gegen diese anliegenden, radial nach innen gerichteten Vorsprung 27 des Gehäuses 17 gebildet sein kann.

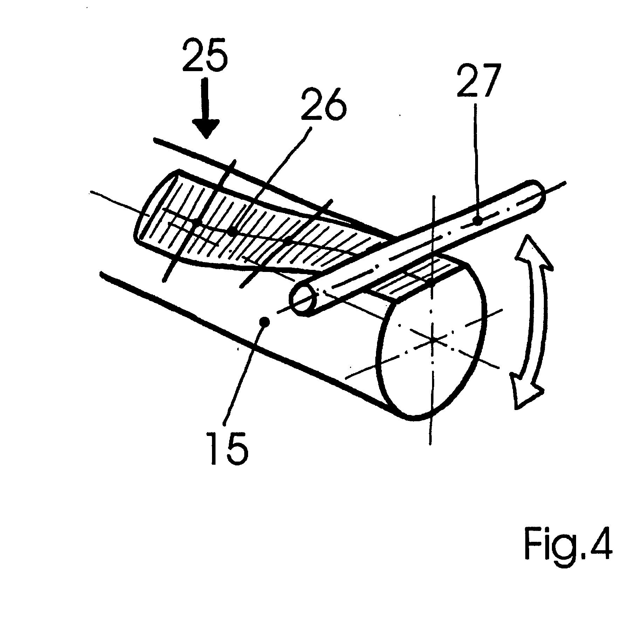

Der Aufbau und die Funktion dieses Schwenkgetriebes 25 ist der Figur 4 am leichtesten zu entnehmen. Diese zeigt gegenüber Figur 3 stark vergrößert einen Teilbereich der Zahnbürstenachse 15 mit der verdrillten Abflachung 26, gegen die der bei diesem Beispiel als Stift ausgebildete Vorsprung 27 anliegt. Zu erkennen ist, dass sich die Zahnbürstenachse 15 im Uhrzeigersinn verdrehen muss, wenn sie in Figur 4 gesehen nach rechts verschoben wird. Entsprechend muss sie sich entgegen dem Uhrzeigersinn verdrehen, wenn sie aus ihrer nicht gezeigten rechten Endstellung zurück in die gezeigte linke Endstellung bewegt wird.

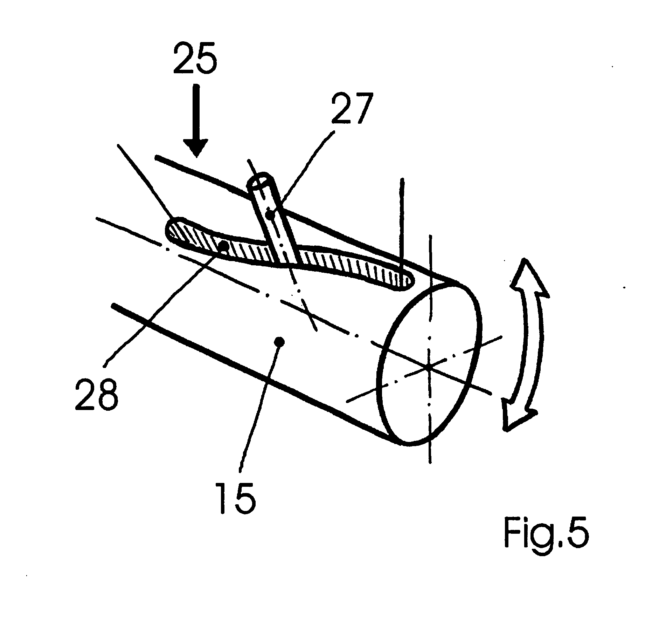

Das Schwenkgetriebe nach Figur 5 hat anstelle der Abflachung 26 eine radial in die Zahnbürstenachse 15 hineinführende, schräg verlaufende Nut 28, in die der Vorsprung 27 radial eingreift. Die hin- und hergehende Pendelbewegung der Zahnbürstenachse 15 kommt entsprechend zwangsläufig zustande, wenn sich die Zahnbürstenachse 15 nach rechts und links verschiebt, wenn sie also ihre vom Getriebe 14 erzeugte Schiebebewegung ausführt.

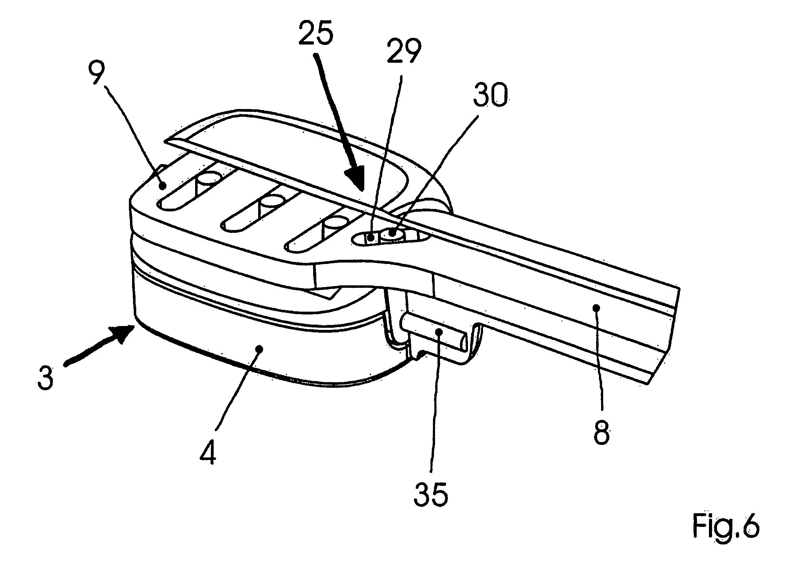

Die Figur 6 zeigt, dass das Schwenkgetriebe 25 auch im Bürstenkopf 3 angeordnet sein kann. Hierbei ist im vorderen Ende 9 der Schubstange 8 eine schräg verlaufende Nut 29 vorgesehen, in welche die Borstenträgerplatte 4 mit einem fest an ihm angebrachten Arm 30 eingreift. Die Borstenträgerplatte 4 ist mittels einer Schwenkachse 35, die mit Versatz parallel zur Längsachse der Schubstange 8 verläuft, schwenkbar im Bürstenkopf 3 gelagert. Bei dieser Ausführungsform führt die Schubstange 8 keine um ihre Längsachse gerichtete Pendelbewegung, sondern nur eine Hubbewegung in Richtung ihrer Längsachse aus. Die schräge Nut 29 führt in Verbindung mit dem Arm 30 dazu, dass sich die Borstenträgerplatte 4 um die Schwenkachse 35 hin- und hergehend verschwenkt.

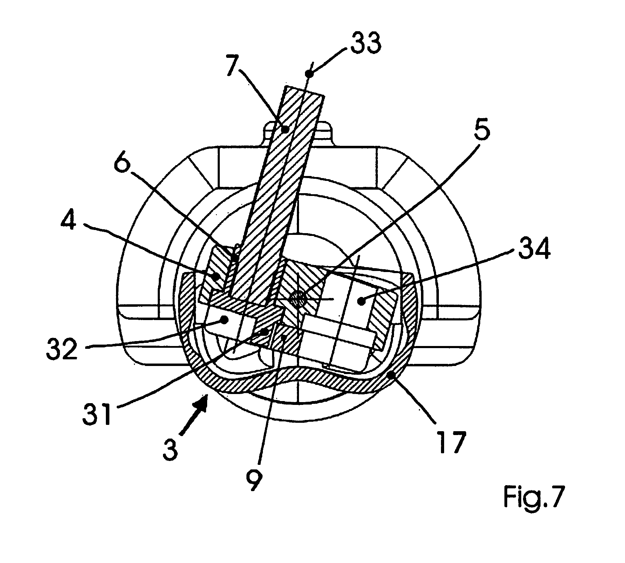

Die Figur 7 zeigt im Detail, wie der Bürstenkopf 3 bei der Ausführungsform nach den Figuren 1 bis 5 gestaltet sein kann. Die Borstenträgerplatte 4 ist wiederum im Gehäuse 17 des Bürstenkopfes 3 um die in Längsrichtung verlaufende Achse 5 pendelnd gelagert. Zu sehen ist weiterhin, wie die Borstenbüschel 7 im Borstenträger 6 gehalten sind. Der Borstenträger 6 ist drehbar in der Borstenträgerplatte 4 eingesetzt und hat einen Exzenterzapfen 31, der in eine Quernut 32 des vorderen Endes 9 der Schubstange 8 greift. Führt das vordere Ende 9 seine in Figur 7 senkrecht zur zeichnungsebene gerichtete, hin- und hergehende Schiebebewegung aus, dann schwenkt der Borstenträger 6 um eine Drehachse 33.

Im rechten Teil der Figur 7 wurde in der Borstenträgerplatte 4 lediglich eine Bohrung 34 dargestellt, in die ebenfalls ein Borstenträger 6 mit Borstenbüscheln 7 einzusetzen ist.

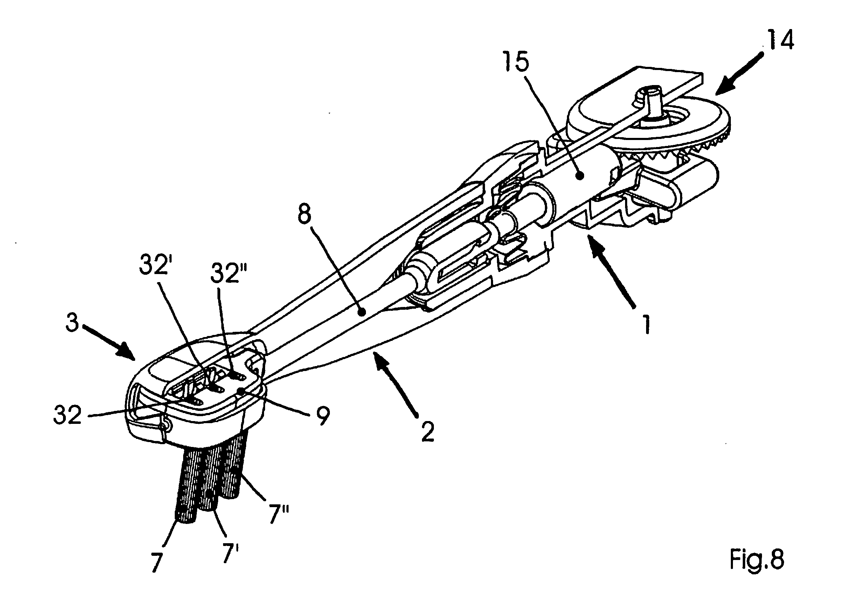

Die Figur 8 dient der weiteren Verdeutlichung der Gestaltung der Zahnbürste nach den Figuren 1, 3 und 7. Zu sehen ist dort die Zahnbürstenachse 15, welche von dem Getriebe 14 im Handteil 1 in die hin- und hergehende Schiebebewegung und die pendelnde Drehbewegung versetzt wird, welche von der Zahnbürstenachse 15 auf die Schubstange 8 im Bürstenteil 2 übertragen wird. Weiterhin erkennt man, dass im vorderen Ende 9 der Schubstange 8 insgesamt drei Quernuten 32, 32' und 32" vorgesehen sind, so dass drei Borstenbüschel 7, 7' und 7" in eine pendelnde Drehbewegung versetzbar sind. Nicht dargestellt wurde, dass auf der rechten Seite des Zahnbürstenkopfes 3 ebenfalls drei Borstenbüschel 7 drehbar angeordnet sind.

### Bezugszeichenliste

- 1: Handteil
- 2: Bürstenteil
- 3: Bürstenkopf
- 4: Borstenträgerplatte
- 5: Achse

- 6: Borstenträger
- 7: Borstenbüschel
- 8: Schubstange
- 9: vorderes Ende
- 10: Motor

- 11: Ritzel
- 12: Kronenrad
- 13: Kronenradachse
- 14: Getriebe
- 15: Zahnbürstenachse

- 16: Kupplung
- 17: Gehäuse
- 18: Gehäuseansatz
- 19: Kugelkopf
- 20: Ring

- 21: Verbindungsstück
- 22: Exzenter
- 23: Führung
- 24: Führungsteil
- 25: Schwenkgetriebe

- 26: Abflachung
- 27: Vorsprung
- 28: Nut
- 29: Nut
- 30: Arm

- 31: Exzenterzapfen
- 32: Quernut
- 33: Drehachse
- 34: Bohrung
- 35: Schwenkachse

## Patentansprüche

1. Elektrische Zahnbürste mit einem Handteil (1) und einem einen Bürstenkopf (3) aufweisenden Bürstenteil (2), welches eine von einem Getriebe (14) in eine in Längsrichtung hin- und hergehende Schiebebewegung versetzbare Schubstange (8) aufweist und bei der im Bürstenkopf (3) in einer Borstenträgerplatte (4) Borstenträger (6) drehbar gelagert sind, welche mittels der Schubstange (8) in eine pendelnde Drehbewegung versetzbar sind und bei der der Bürstenkopf (3) durch das Getriebe (14) in eine um die Längsachse der Zahnbürste pendelnde Bewegung versetzbar ist, **dadurch gekennzeichnet, dass** die Borstenträgerplatte (4) im Bürstenkopf (3) um eine in Längsrichtung der Zahnbürste verlaufende Achse (5) pendelnd gelagert und das Bürstenteil (2) unverdrehbar mit dem Handteil (1) verbunden ist und dass das Getriebe (14) zum Verschwenken der Borstenträgerplatte (4) relativ zum Bürstenteil (2) ausgebildet ist.

2. Elektrische Zahnbürste nach Anspruch 1, **dadurch gekennzeichnet, dass** das Getriebe (14) zum Erzeugen einer Pendelbewegung der Schubstange (8) um ihre Längsachse ausgebildet ist, dass die Schubstange (8) relativ zum Bürstenteil (2) um ihre Längsachse drehbar gehalten ist und dass die Schubstange (8) mit einem vorderen Ende (9) axial verschieblich gegen die Borstenträgerplatte (4) anliegt.

3. Elektrische Zahnbürste nach Anspruch 2, **dadurch gekennzeichnet, dass** das vordere Ende (9) der Schubstange (8) abgekröpft ist und parallel zur Längsachse der Schubstange (8) ausgerichtet ist.

4. Elektrische Zahnbürste nach zumindest einem der vorangehenden Ansprüche, **dadurch gekennzeichnet, dass** die Achse (5) im Bürstenkopf an beiden Seiten der Borstenträgerplatte (4) gehalten ist und mit einem freien Ende in die abgekröpfte Schubstange (8) ragt.

5. Elektrische Zahnbürste nach zumindest einem der vorangehenden Ansprüche, **dadurch gekennzeichnet, dass** das Getriebe (14) im Handteil (1) durch einen quer zur Zahnbürstenachse (15) und damit auch quer zur Schubstange (8) ausgerichteten Exzenter (22) und ein Führungsteil (24) der Zahnbürstenachse (15) mit einer quer zur Längsachse der Zahnbürstenachse (15) ausgerichteten Führung (23) gebildet ist, welches über diesen Exzenter (22) greift.

6. Elektrische Zahnbürste nach zumindest einem der vorangehenden Ansprüche, **dadurch gekennzeichnet, dass** das Getriebe (14) ausschließlich zur Erzeugung einer Schiebebewegung der Zahnbürstenachse (15) ausgebildet ist und zusätzlich zu dem Getriebe (14) ein Schwenkgetriebe (25) zum Erzeugen der Schwenkbewegung der Zahnbürstenachse (15) vorgesehen ist.

7. Elektrische Zahnbürste nach Anspruch 6, **dadurch gekennzeichnet, dass** das Schwenkgetriebe (25) eine verdrillte Abflachung (26) auf der Zahnbürstenachse (15) und einen dagegen anliegenden, gehäusefesten, radialen Vorsprung (27) aufweist.

8. Elektrische Zahnbürste nach Anspruch 6, **dadurch gekennzeichnet, dass** das Schwenkgetriebe (25) eine radial in die Zahnbürstenachse (15) führende, schräge Nut (28) aufweist, in die ein gehäusefester, radialer Vorsprung (27) eingreift.

9. Elektrische Zahnbürste nach zumindest einem der vorangehenden Ansprüche, **dadurch gekennzeichnet, dass** das Schwenkgetriebe (25) ebenso wie das Getriebe (14) für die Schiebebewegung im Handteil (1) angeordnet ist.

10. Elektrische Zahnbürste nach zumindest einem der vorangehenden Ansprüche, **dadurch gekennzeichnet, dass** das Schwenkgetriebe (25) im Bürstenkopf (3) angeordnet ist und eine schräg zur Schieberichtung der Schubstange (8) verlaufende Nut (29) aufweist, in welche ein radial zur Schwenkachse der Borstenträgerplatte (4) ausgerichteter, fest mit der Borstenträgerplatte (4) verbundener Arm (30) greift.

11. Elektrische Zahnbürste nach Anspruch 9, **dadurch gekennzeichnet, dass** die Borstenträgerplatte (4) im Zahnbürstenkopf (3) auf einer parallel zur Längsachse des Bürstenteils (2) ausgerichteten Schwenkachse (35) an zwei gegenüberliegenden Seiten schwenkbar gelagert ist und die Schubstange (8) im Bürstenteil (2) unverdrehbar geführt ist.

12. Elektrische Zahnbürste nach zumindest einem der vorangehenden Ansprüche, **dadurch gekennzeichnet, dass** das Getriebe (14) einen als Exzenter ausgebildeten Kugelkopf (19) aufweist und die Zahnbürstenachse (15) mit einem radial zu ihrer Längsachse versetzten Ring (20) über diesen Kugelkopf (19) greift.

## Claims

1. Electric toothbrush comprising a handle (1) and a brush member (2) which comprises a brush head (3), whereby the brush member comprises a connecting rod (8) which is set into a sliding movement reciprocating in a longitudinal direction by a gear (14), whereby the electric toothbrush has bristle holders (6) which are mounted rotatably in a bristle holder plate (4) in the brush head (3), whereby the bristle holders are set into an oscillatory rotating movement by the connecting rod (8) and whereby the brush head (3) of the electric toothbrush is set into oscillatory movement about the longitudinal axis of the toothbrush by the gear (14), **characterized in that** the bristle holder plate (4) is mounted in the brush head (3) so as to oscillate about a shaft (5) running in the longitudinal direction of the toothbrush and the brush member (2) is connected non-rotatably to the handle (1), and that the gear (14) is formed relative to the brush member (2) so as to tilt the bristle holder plate (4).

2. Electric toothbrush according to claim 1, **characterized in that** the gear (14) is formed to cause an oscillatory movement of the connecting rod (8) about its longitudinal axis, that the connecting rod (8) is mounted such that it rotates about its longitudinal axis relative to the brush member (2) and that the connecting rod (8) rests with its front end (9) so as to slide axially against the bristle holder plate (4).

3. Electric toothbrush according to claim 2, **characterized in that** the front end (9) of the connecting rod (8) is bent at right angles and is oriented parallel to the longitudinal axis of the connecting rod (8).

4. Electric toothbrush according to at least one of the preceding claims, **characterized in that** the shaft (5) is held in the brush head on both sides of the bristle holder plate (4) and projects with its free end into the connecting rod (8) which is bent at right angles.

5. Electric toothbrush according to at least one of the preceding claims, **characterized in that** the gear (14) is formed in the handle (1) by an eccentric (22) oriented crosswise to the toothbrush shaft (15) and thus also crosswise to the connecting rod (8) and by a guide member (24) of the toothbrush shaft (15) with a guide (23) which is oriented at right angles to the longitudinal axis of the toothbrush shaft (15), whereby the guide member reaches over the eccentric (22).

6. Electric toothbrush according to at least one of the preceding claims, **characterized in that** the gear (14) is formed exclusively for generating a sliding movement of the toothbrush shaft (15) and, in addition to the gear (14), a swivel gear (25) is provided for generating the swivelling movement of the toothbrush shaft (15).

7. Electric toothbrush according to claim 6, **characterized in that** the swivel gear (25) has a twisted flattening (26) on the toothbrush shaft (15) and a radial projection (27) which is stationary in the housing and rests against the flattening.

8. Electric toothbrush according to claim 6, **characterized in that** the swivel gear (25) has a slanted groove (28) which runs radially into the toothbrush shaft (15) and with which a radial projection (27) engages that is stationary in the housing.

9. Electric toothbrush according to at least one of the preceding claims, **characterized in that** the swivel gear (25) is disposed in the handle (1) as is the gear (14) for the sliding movement.

10. Electric toothbrush according to at least one of the preceding claims, **characterized in that** the swivel gear (25) is disposed in the brush head (3) and has a groove (29) which runs obliquely to the sliding direction of the connecting rod (8) and with which an arm (30) engages which is oriented radially to the swivel shaft of the bristle holder plate (4) and is connected stationarily to the bristle holder plate (4).

11. Electric toothbrush according to claim 9, **characterized in that** the bristle holder plate (4) is mounted in the toothbrush head (3) swivellably on a swivel shaft (35) which is oriented parallel to the longitudinal axis of the brush member (2) on two opposing sides and that the connecting rod (8) in the brush member (2) is guided non-rotatably.

12. Electric toothbrush according to at least one of the preceding claims, **characterized in that** the gear (14) has a spherical head (19) in the form of an eccentric and that the toothbrush shaft (15) reaches with a ring (20), offset radially to its longitudinal axis, over the spherical head (19).

## Revendications

1. Brosse à dents électrique, avec un manche (1) et une partie brosse (2) comportant une tête de brosse (3), comportant une tige de poussée (8) susceptible d'être amenée par une transmission (14) dans un déplacement de poussée aller et retour en direction horizontale et sur laquelle dans la tête de brosse (3), des supports de poils (6), qui au moyen de la tige de poussée (8) sont susceptibles d'être amenés dans un mouvement de rotation oscillant sont logés de façon rotative dans une plaque support de poils (4) et sur laquelle la tête de brosse (3) est susceptible d'être amenée par la transmission (14) dans un déplacement oscillant autour de l'axe longitudinal de la brosse à dents, **caractérisée en ce que** la plaque support de poils (4) est logée de façon oscillante dans la tête de brosse (3), autour d'un axe (5) s'étendant en direction longitudinale de la brosse à dents et **en ce que** la partie brosse (2) est reliée de façon solidaire en rotation avec le manche (1) et **en ce que** la transmission (14) est conçue pour faire pivoter la plaque support de poils (4) par rapport à la partie brosse (2).

2. Brosse à dents électrique selon la revendication 1, **caractérisée en ce que** la transmission (14) est conçue pour créer un mouvement oscillant de la tige de poussée (8) autour de son axe longitudinal, **en ce que** la tige de poussée (8) est maintenue de façon rotative autour de son axe longitudinal, et **en ce que** la tige de poussée (8) s'appuie par une extrémité antérieure (9) contre la plaque support de poils (4).

3. Brosse à dents électrique selon la revendication 2, **caractérisée en ce que** l'extrémité antérieure (9) de la tige de poussée (8) est coudée et orientée à la parallèle de l'axe longitudinal de la tige de poussée (8).

4. Brosse à dents électrique selon au moins l'une quelconque des revendications précédentes, **caractérisée en ce que** l'axe (5) est maintenu dans la tête de brosse sur les deux côtés de la plaque support de poils (4) et saillit par une extrémité libre dans la tige de poussée (8) coudée.

5. Brosse à dents électrique selon au moins l'une quelconque des revendications précédentes, **caractérisée en ce que** la transmission (14) dans le manche (1) est formée par un excentrique (22) orienté à la transversale de l'axe de la brosse à dents (15) et donc également à la transversale de la tige de poussée (8) et **en ce qu'**un élément de guidage (24) de l'axe de la brosse à dents (15) est formé avec un guidage (23) orienté à la transversale de l'axe longitudinal de l'axe de la brosse dents (15), qui s'engage par l'intermédiaire dudit excentrique (22).

6. Brosse à dents électrique selon au moins l'une quelconque des revendications précédentes, **caractérisée en ce que** la transmission (14) est uniquement conçue pour créer un mouvement de poussée de l'axe de la brosse à dents (15) et qu'en supplément de la transmission (14), il est prévu une transmission de pivotement (25) pour créer le mouvement pivotant de l'axe de la brosse à dents (15).

7. Brosse à dents électrique selon la revendication 6, **caractérisée en ce que** la transmission de pivotement (25) comporte un méplat (26) torsadé sur l'axe de la brosse à dents (15) et une saillie (27) radiale fixe sur le boîtier, s'appliquant sur celui-ci.

8. Brosse à dents électrique selon la revendication 6, **caractérisée en ce que** la transmission de pivotement (25) comporte une rainure (28) inclinée menant dans l'axe de la brosse à dents (15), dans laquelle s'engage une saillie (27) radiale fixe sur le boîtier.

9. Brosse à dents électrique selon au moins l'une quelconque des revendications précédentes, **caractérisée en ce que** la transmission de pivotement (25) ainsi que la transmission (14) pour le déplacement en poussée sont disposées dans le manche (1).

10. Brosse à dents électrique selon au moins l'une quelconque des revendications précédentes, **caractérisée en ce que** la transmission de pivotement (25) est disposée dans la tête de brosse (3) et comporte une rainure (29) s'écoulant en inclinaison par rapport à la direction de poussée de la tige de poussée (8), dans laquelle s'engage un bras (30) orienté en direction radiale par rapport à l'axe de pivotement de la plaque support de poils (4), relié fixement avec la plaque support de poils (4).

11. Brosse à dents électrique selon la revendication 9, **caractérisée en ce que** la plaque support de poils (4) est logée de façon pivotante sur deux côtés opposés sur un axe de pivotement (35) orienté à la parallèle de l'axe longitudinal de la partie brosse (2), et **en ce que** la tige de poussée (8) est guidée de façon solidaire en rotation dans la partie brosse (2).

12. Brosse à dents électrique selon au moins l'une quelconque des revendications précédentes, **caractérisée en ce que** la transmission (14) comporte une rotule (19) conçue sous forme d'excentrique et **en ce que** l'axe de la brosse à dents (15) s'engage avec une bague (20) déportée en direction radiale par rapport à son axe longitudinal, par l'intermédiaire de rotule (19).
